# EUROPEAN PATENT SPECIFICATION

(11) **EP 3 048 533 B1**
(45) Date of publication and mention of the grant of the patent: **01.02.2017**
(21) Application number: 15160464.2
(22) Date of filing: 24.03.2015
(51) Int. Cl.: G06F 12/0811, G06F 12/0831, G06F 12/084, G06F 12/0888

(54) **HETEROGENEOUS SYSTEM ARCHITECTURE FOR SHARED MEMORY**
HETEROGENE SYSTEMARCHITEKTUR FÜR GEMEINSAMEN SPEICHER
ARCHITECTURE DE SYSTÈME HÉTÉROGÈNE POUR MÉMOIRE PARTAGÉE

(30) Priority: 21.01.2015 US 201514601565
(43) Date of publication of application: 27.07.2016
(73) Proprietor: MediaTek Singapore Pte. Ltd., Singapore 138628 (SG)
(72) Inventor: Huang, Hsilin, Cupertino, CA 95014 (US); Lu, Chien-Ping, Cupertino, CA 95014 (US)
(74) Representative: Hoefer & Partner Patentanwälte mbB

(56) References cited:
- EP-A1- 0 896 279
- US-A1- 2014 040 552

## Description

### TECHNICAL FIELD

Embodiments of the invention relate to a heterogeneous computing system; and more specifically, to data coherence in a heterogeneous computing system that uses shared memory. In particular, the invention relates to a processing unit according to the precharacterizing part of independent claim 1 and a method of a processing unit according to the pre-characterized part of independent claim 11. Such a processing unit and method are described in US 2014/040552 A1.

### BACKGROUND

In a multi-processor system, each processor has its own cache to store a copy of data that is also stored in the system memory. Problems arise when multiple data copies in the caches are not coherent (i.e., have different values). Various techniques have been developed to ensure data coherency in a multi-processor system. One technique is snooping, which records the coherence states (also referred to as "states") of cache lines involved in memory transactions. A "cache line" (also referred to as "line") refers to a fixed-size data block in a cache, which is a basic unit for data transfer between the system memory and the cache. The state of a cache line indicates whether the line has been modified, has one or more valid copies outside the system memory, has been invalidated, etc.

A heterogeneous computing system is one type of multi-processor system. A heterogeneous computing system is a computing system that includes more than one type of processor working in tandem to perform computing tasks. For example, a heterogeneous computing system may include one or more central processing units (CPUs), one or more graphics processing units (GPUs), one or more digital signal processors (DSPs), etc.

In conventional heterogeneous computing systems, there is generally no hardware support for data coherence across different processor types. The lack of such support makes it difficult for different processor types to share a common system memory space. Thus, data transfer between different types of processors typically involves memory copying. In some systems, the CPU has access to data in the system memory while the GPU has access to data in a separate graphics memory. To read data from the system memory, the GPU first requests for a data copy from the CPU through a memory controller. Then the GPU fetches the data copy from a system memory data buffer to a graphics memory data buffer through direct memory access (DMA) logic. Memory copying from one buffer to another can be slow and inefficient. In more advanced systems, one or more CPUs and GPUs are integrated into a system-on-a-chip (SoC). The CPUs and GPUs share the same system bus but use two different regions of the same physical memory. Transferring data between the CPUs and the GPUs still involves memory copying from one buffer to the other in the same physical memory.

### SUMMARY

In one embodiment, a processing unit is provided. The processing unit comprises one or more first cores. The one or more first cores and one or more second cores are part of a heterogeneous computing system and share a system memory. Each of the first cores comprises a first level-1 (L1) cache and a second L1 cache. The first L1 cache is coupled to an instruction-based computing module of the first core to receive a first cache access request. The first L1 cache supports snooping by the one or more second cores. The second L1 cache is coupled to a fixed-function pipeline module of the first core to receive a second cache access request, and the second L1 cache does not support snooping. Each first core further comprises a level-2 (L2) cache shared by the one or more first cores and coupled to the first L1 cache and the second L1 cache. The L2 cache supports snooping by the one or more second cores. The L2 cache receives the first cache access request from the first L1 cache, and receives the second cache access request from the second L1 cache.

In another embodiment, a method is provided for a processing unit that includes one or more first cores and shares a system memory with one or more second cores in a heterogeneous computing system. The method comprises receiving a first cache access request by a first L1 cache coupled to an instruction-based computing module of a first core. The first L1 cache supports snooping by the one or more second cores. The method further comprises receiving a second cache access request by a second L1 cache coupled to a fixed-function pipeline module of the first core, wherein the second L1 cache does not support snooping. The method further comprises receiving, by a L2 cache shared by the one or more first cores, the first cache access request from the first L1 cache and the second cache access request from the second L1 cache. The L2 cache supports snooping by the one or more second cores.

### BRIEF DESCRIPTION OF THE DRAWINGS

The present invention is illustrated by way of example, and not by way of limitation, in the figures of the accompanying drawings in which like references indicate similar elements. It should be noted that different references to "an" or "one" embodiment in this disclosure are not necessarily to the same embodiment, and such references mean at least one. Further, when a particular feature, structure, or characteristic is described in connection with an embodiment, it is submitted that it is within the knowledge of one skilled in the art to effect such feature, structure, or characteristic in connection with other embodiments whether or not explicitly described.
Figure 1 illustrates an example architecture for a heterogeneous computing system according to one embodiment.
Figure 2 illustrates a block diagram of a GPU according to one embodiment.
Figure 3 illustrates functional blocks within a GPU core according to one embodiment.
Figure 4 illustrates an overview of operations performed on a GPU cache according to one embodiment.
Figure 5 illustrates further details of a GPU with snoop support according to one embodiment.
Figure 6 illustrates GPU caches that each includes one or more levels of caches according to one embodiment.
Figure 7 is a flow diagram illustrating a method of a processing unit that supports snooping in a heterogeneous computing system according to one embodiment.

### DETAILED DESCRIPTION

In the following description, numerous specific details are set forth. However, it is understood that embodiments of the invention may be practiced without these specific details. In other instances, well-known circuits, structures and techniques have not been shown in detail in order not to obscure the understanding of this description. It will be appreciated, however, by one skilled in the art, that the invention may be practiced without such specific details. Those of ordinary skill in the art, with the included descriptions, will be able to implement appropriate functionality without undue experimentation.

Embodiments of the invention provide a system architecture that manages data coherence in a heterogeneous computing system. The term "heterogeneous computing system" refers to a computing system that includes processors having different hardware architecture, such as CPUs, GPUs and digital signal processors (DSPs). In the following description, embodiments of the invention are described with reference to an example of a heterogeneous computing system that includes one or more CPUs and one or more GPUs. It is understood, however, that the embodiments of the invention are applicable to any heterogeneous computing system, such as a system that includes any combination of different types of CPUs, GPUs, DSPs and/or other types of processors.

As an example, a heterogeneous computing system may include a combination of CPUs and GPUs. The GPU performs a sequence of processing steps to create a 2D raster representation of a 3D scene. These processing steps are referred to as 3D graphics pipelining or rendering pipelining. The 3D graphics pipelining turns a 3D scene (which can be a 3D model or 3D computer animation) into a 2D raster representation for display. In a conventional GPU, the 3D graphics pipelining is implemented by fixed-function hardware tailored for speeding up the computation. As the technology evolved, more and more GPUs include general-purpose programmable hardware to allow flexibility in graphics rendering. In addition to rendering graphics, today's GPUs can also perform general computing tasks.

In a heterogeneous system such as the ARM® processor system, multiple CPU clusters are integrated with a GPU on the same SoC. The CPUs support snooping; that is, each CPU tracks the states of its cache lines and provides their states and contents for the rest of the system to read. Therefore, the GPU can obtain a valid data copy from a CPU cache. However, the GPU cache typically does not support snooping by other types of processors; that is, the other processors (e.g., the CPUs) cannot access the states of the GPU's cache lines. As a result, in such a system the GPU can access the CPU caches, but the CPUs cannot access the GPU caches. The CPU also cannot use the copy of the GPU's cache line in the system memory because that copy may be stale. Some systems use software solutions to handle a CPU's request for a GPU's cache line. One software solution is to flush all or a range of the GPU cache lines into the system memory, and then invalidate those cache lines in the GPU. The software solutions are generally very inefficient because they are coarse-grained with respect to the number of cache lines involved in maintaining data coherence.

Embodiments of the invention provide an efficient hardware solution for data coherence in a heterogeneous computing system. The hardware solution enables the GPU to provide the states and contents of its cache lines to the rest of the system. Thus, the CPU can snoop the states of the GPU caches that support snooping, just as the GPU can snoop the states of the CPU caches. Snooping allows the maintenance of data coherence among the CPU caches, the GPU caches (that support snooping) and the system memory. Moreover, like the CPU caches, the GPU caches that support snooping are accessible with physical addresses. As both CPU caches and GPU caches are addressed in the same physical address space, data transfer between a CPU and a GPU can be performed by address (i.e., pointer) passing. Thus, memory copying can be avoided.

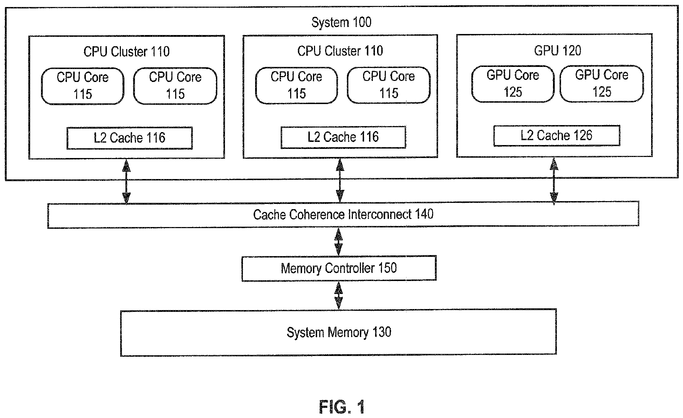

Figure 1 illustrates an example architecture for a heterogeneous system 100 according to one embodiment. The system 100 includes one or more CPU clusters 110, and each CPU cluster 110 further includes one or more CPU cores 115. The system 100 also includes a GPU 120, which further includes one or more GPU cores 125. Both the CPU clusters 110 and the GPU 120 have access to a system memory 130 (e.g., dynamic random-access memory (DRAM) or other volatile or non-volatile random-access memory) via a cache coherence interconnect 140 and a memory controller 150. In one embodiment, the communication links between the cache coherence interconnect 140 and the memory controller 150, as well as between the memory controller 150 and the system memory 130, use a high performance, high clock frequency protocol; e.g., the Advanced eXtensible Interface (AXI) protocol. In one embodiment, both the CPU clusters 110 and the GPU 120 communicate with the cache coherence interconnect 140 using a protocol that supports system wide coherency; e.g., the AXI Coherency Extensions (ACE) protocol. Although two CPU clusters 110 (each with two CPU cores 115) and one GPU 120 (with two GPU cores 125) are shown in Figure 1, it is understood that system 100 may include any number of CPU clusters 110 with any number of CPU cores 115, and any number of GPUs 120 with any number of GPU cores 125.

Figure 1 also shows that each CPU cluster 110 includes a level-2 (L2) cache 116 shared by the CPU cores 115 in the same cluster. Similarly, the GPU 120 also includes a L2 cache 126 shared by the GPU cores 125. The L2 caches 116 and 126 are part of the multi-level cache hierarchies used by the CPU cores 115 and the GPU cores 125, respectively.

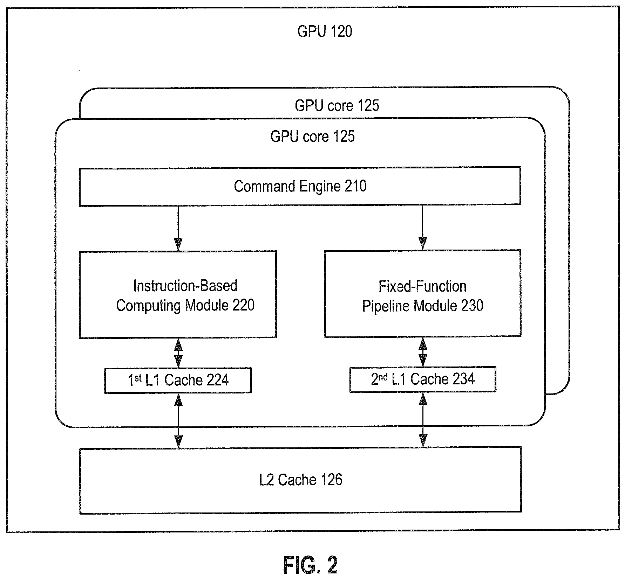

Figure 2 illustrates a block diagram of the GPU 120 according to one embodiment. In this embodiment, each GPU core 125 includes a command engine 210, an instruction-based computing module 220, and a fixed-function pipeline module 230. The command engine 210 receives and forwards commands to appropriate processing modules. The instruction-based computing module 220 is a programmable computing module that executes instructions of a predefined instruction set. The fixed-function pipeline module 230 has special-purpose hardware optimized for graphics pipeline processing. Both the instruction-based computing module 220 and the fixed-function pipeline module 230 perform computation in the virtual address space.

The instruction-based computing module 220 operates on a 1^{st} level-1 (L1) cache 224 for general-purpose computation and programmable graphics computation, and the fixed-function pipeline module 230 operates on a 2^{nd} L1 cache 234 for fixed-function graphics pipelining computation. Inside the GPU 120 but outside the GPU cores 125 is the L2 cache 126 shared by the GPU cores 125. The data in the 1^{st} L1 cache 224, the 2^{nd} L1 cache 234 and the L2 cache 126 is either a shadow copy or a newer copy of the data in the system memory 130.

According to embodiments of the invention, both the 1^{st} L1 cache 224 and the L2 cache 126 support snooping, and the 2^{nd} L1 cache 234 does not support snoopying. In one embodiment, both the 1^{st} L1 cache 224 and the L2 cache 126 use physical addresses (or a portion thereof) to index and access their cache lines. Moreover, both the caches 224 and 126 provide the states of their cache lines for the rest of the system 100 to read. The operations of maintaining and keeping track of the states of the cache lines may be performed by circuitry located within, coupled to, or accessible to the caches 224 and 126.

As the instruction-based computing module 220 operates in the virtual address space, it sends memory requests (or equivalently, "cache access requests") to the 1^{st} L1 cache 224 using virtual addresses to identify the requested instructions and/or data to be accessed. The virtual addresses are translated into physical addresses, such that the 1^{st} L1 cache 224 can determine the state of a cache line indexed by a physical address and access its internal storage when there is a hit. Similarly, when the L2 cache 126 receives a memory request that contains a virtual address, the virtual address is translated into a physical address. Using the physical address, the L2 cache 126 can determine the state of the cache line indexed by the physical address and access its internal storage when there is a hit. As both the 1^{st} L1 cache 224 and the L2 cache 126 support snooping, the cache lines' contents and states in both caches 224 and 126 can be obtained by other processors (e.g., the CPU cores 115) to maintain coherence among the caches across the processors. Thus, these GPU caches and the CPU caches can use the same memory address space for data access, and can pass pointers (i.e., addresses) to each other for data transfer.

On the other hand, the 2^{nd} L1 cache 234 operates in the virtual address space and does not support snooping. As the fixed-function pipeline module 230 also operates in the virtual address space, it sends memory requests to the 2^{nd} L1 cache 234 using virtual addresses to identify the requested instructions and/or data to be accessed. The 2^{nd} L1 cache 234 can act on the virtual addresses in these memory requests without virtual-to-physical address translation.

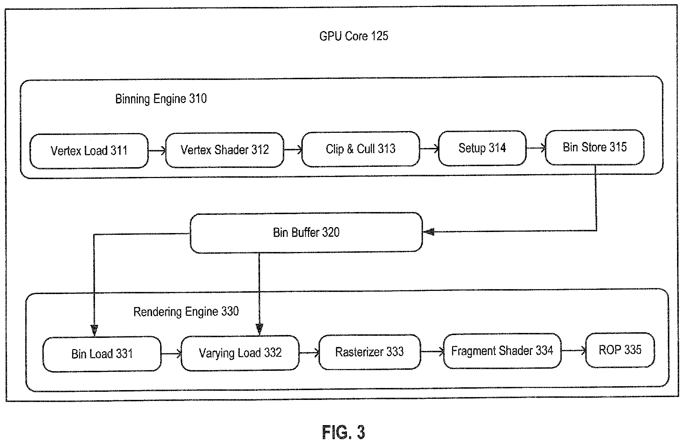

Figure 3 illustrates the functional blocks within a GPU core 300 according to one embodiment. The GPU core 300 is an example of the GPU core 125 referenced in connection with Figures 1 and 2. In one embodiment, the GPU core 300 includes a binning engine 310, a bin buffer 320 and a rendering engine 330. The binning engine 320 further includes a vertex load unit 311, a vertex shader 312, a clip and cull unit 313, a setup unit 314 and a bin store unit 315. The vertex load unit 311 loads vertex data, which describes the graphical objects to be rendered, into the binning engine 320 for binning. Binning is a deferred rendering technique known in the art of graphics processing for reducing memory I/O overhead. The vertex shader 312, the clip and cull unit 313 and the setup unit 314 process and set up the vertex data. The bin store unit 315 sorts the vertex data into corresponding bins, and stores each bin into the bin buffer 320 according to a bin data structure. The rendering engine 330 includes a bin load unit 331, a varying load unit 332, a rasterizer 333, a fragment shader 334 and a render output (ROP) unit 335. The bin load unit 331 and the varying load unit 332 load the bin data and varying variables (e.g., as defined by OpenGL®), bin by bin, from the bin buffer 320 for rendering. The rasterizer 333 rasterizes the loaded data. The fragment shader 334 processes the rasterized geometry into a tile, and renders and applies the tile with color and depth values. The ROP unit 335 writes the color and depth values into memory. In alternative embodiments, the GPU core 300 may include different functional blocks from what is shown in Figure 3.

Although each functional block in Figure 3 is shown as a separate unit, in some embodiments some of these blocks may share the same hardware, software, firmware, or any combination of the above, to perform their designated tasks. Moreover, the location of each functional block in alternative embodiments may differ from what is shown in Figure 3. For example, although the vertex shader 312 and the fragment shader 334 are shown as two separate functional blocks, in some embodiments the operations of the vertex shader 312 and the fragment shader 334 may be performed by the same hardware; e.g., by a programmable unified shader which is shown in Figure 2 as the instruction-based computing module 220. The operations of the rest of the functional blocks may be performed by the fixed-function pipeline module 230 of Figure 2.

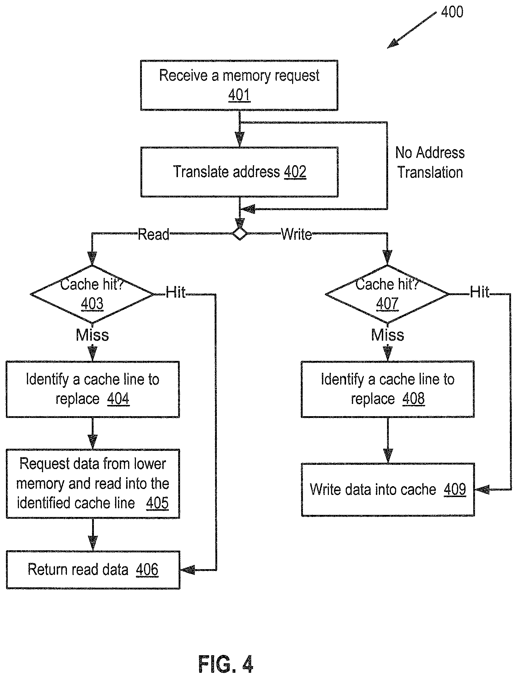

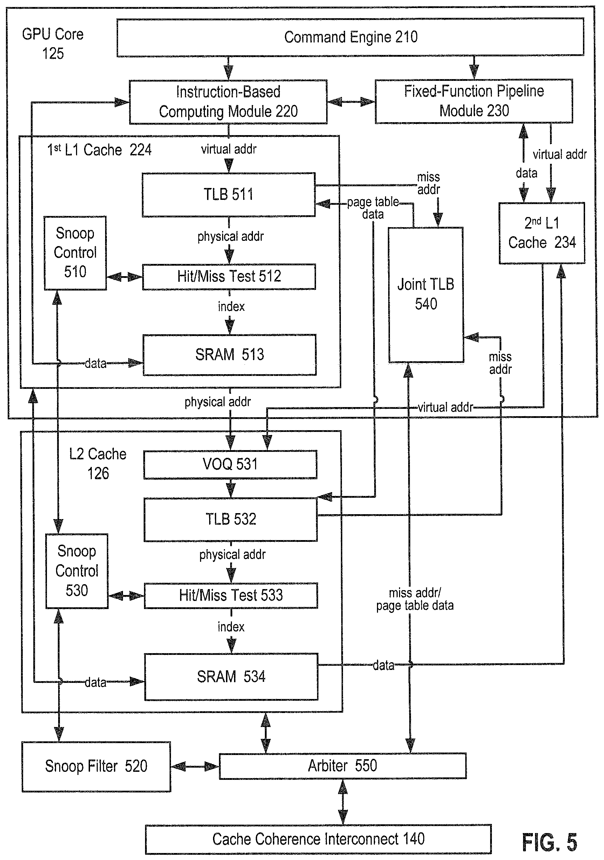

Figure 4 illustrates an overview of operations 400 performed on a GPU cache; e.g., any of the 1^{st} L1 cache 224, the 2^{nd} L1 cache 234 and the L2 cache 126, according to one embodiment. The operations 400 may be performed by circuitry located within, coupled to, or accessible to the GPU cache. Although the operations 400 illustrated in the example of Figure 4 is based on the write-back policy, a different write policy such as write-through or a variant of write-back or write-through can be used. Moreover, the description of the operations 400 has been simplified to focus on the high-level concept of the GPU cache operation. Further details will be described later in connection with Figure 5.

The operations 400 begin when the GPU cache receives a memory request (block 401). The GPU cache may or may not perform an address translation for the address contained in the memory request; whether the operation is performed is dependent on the specific cache and the type of address in the memory request. For the 1^{st} L1 cache 224 and the L2 cache 126, address translation is performed when the memory request contains a virtual address, and that virtual address is translated into a physical address (block 402). However, for the L2 cache 126, no address translation is performed when the memory request contains a physical address. On the other hand, for the 2^{nd} L1 cache 234, no address translation is performed. This is because the memory request to the 2^{nd} L1 cache 234 contains a virtual address and all memory access in the 2^{nd} L1 cache 234 is performed in the virtual address space.

If the memory request is a read request, a hit/miss test is performed on the requested address (block 403). If there is a hit for the read, the GPU cache reads from the requested address and returns the read data (block 406). If there is a miss for the read, the GPU cache first identifies one of its cache lines to replace (block 404). The details of which line to replace and how to replace it depends on the replacement policy chosen for the cache and are not described here. The GPU cache then requests the data from a lower memory and reads the data into the identified cache line (block 405). In one embodiment, for the 1^{st} L1 cache 224 and the 2^{nd} L1 cache 234, the lower memory is the L2 cache 126; for the L2 cache 126 the lower memory is the system memory 130. In alternative embodiments where there are more than two levels of caches, the lower memory is the level of cache closer to the system memory 130 or the system memory itself. The GPU cache then returns the read data (block 406).

Similarly, for a write request, a hit/miss test is performed on the requested address (block 407). If there is a hit, the GPU cache writes new data into the cache (block 409), overwriting the old data at the requested address. If there is a miss, the GPU cache first identifies one of its cache lines to replace (block 408). The details of which line to replace and how to replace it depends on the replacement policy chosen for the cache and are not described here. The GPU cache then writes the new data into the identified cache line (block 409).

Figure 5 is a block diagram that illustrates further details of the GPU 120 for performing the operations 400 of Figure 4 with snoop support according to one embodiment. It is understood that the operations 400 of Figure 4 is used as an example; the GPU 120 of Figure 5 can perform operations different from those shown in Figure 4. Referring also to Figure 1, the GPU core 125 shown in Figure 5 can be any of the GPU cores 125 in Figure 1.

In one embodiment, snoop hardware is provided in the system 100 to support GPU snooping. The snoop hardware provides the cache lines' states and contents to the rest of the system 100. In one embodiment, the snoop hardware includes a snoop filter 520 and snoop controls 510 and 530.

In one embodiment, the snoop filter 520 keeps track of which cache lines are present in which cache. More specifically, for each cache monitored by the snoop filter 520, the snoop filter 520 stores the physical tags (each of which is a portion of a physical address) or a portion of each physical tag for all the cache lines present in that cache. In the example of Figure 5, the snoop filter 520 may store the physical tags of all cache lines in the 1^{st} L1 cache 224 of each GPU core 125, and the physical tags of all cache lines in the L2 cache 126. Thus, the snoop filter 520 can inform any of the CPU core 115 which cache or caches in the GPU 120 hold a requested data copy. Although the snoop filter 520 is shown to be located within the GPU 120, in some embodiments the snoop filter 520 may be centrally located in the system 100; e.g., in the cache coherence interconnect 140, or may be distributedly located in the system 100; e.g., in each CPU cluster 110 and the GPU 120, or in each CPU core 115 and GPU core 125.

When the snoop filter 520 indicates that a cache line is present in the 1^{st} L1 cache 224, the memory request is forwarded to the 1^{st} L1 cache 224 via the snoop control 510. The snoop control 510 performs, or directs the 1^{st} L1 cache 224 to perform, a snoop hit/miss test based on the states of its cache lines. The terms "snoop hit/miss test," "hit/miss test," and "cache hit/miss test" all refer to a test on a cache for determining whether a cache line is present. However, the term "snoop hit/miss test" explicitly indicates that the request originator is outside the GPU 120; e.g., one of the CPU cores 115.

The 1^{st} L1 cache 224 maintains, or otherwise has access to, the states of all of its cache lines. In one embodiment, the states are tracked using a MESI protocol to indicate whether each cache line has been modified (M), has only one valid copy outside of the system memory 130 (E), has multiple valid copies shared by multiple caches (S), or has been invalidated (I). Alternative protocols can also be used, such as the MOESI protocol where an additional state (O) represents data that is both modified and shared. The result of the snoop hit/miss test is sent back to the request originator; e.g., one of the CPU cores 115. The result of the snoop hit/miss test may include a hit or miss signal (e.g., 1 bit) and/or the requested data if there is a snoop hit. The terms "snoop hit," "hit," and "cache hit" all refer to a determination that a requested cache line is present. However, the term "snoop hit" explicitly indicates that the request originator is outside the GPU 120; e.g., one of the CPU cores 115. The hit or miss signal may also be forwarded by the snoop control 510 to the snoop filter 520 to update its record. Similarly, the snoop control 530 performs, or directs the L2 cache 126 to perform, snoop hit/miss tests based on the states of its cache lines. The snoop controls 510 and 530 send cache line information between the 1^{st} L1 cache 224 and the L2 cache 126, and between the caches 224, 126 and the snoop filter 520.

More specifically, when another processing core (e.g., any of the CPU cores 115) requests a data copy that is located in the GPU 120 according to the snoop filter 520, the physical tag of the requested data can be forwarded to the 1^{st} L1 cache 224 and the L2 cache 126 via the snoop controls 510 and 530, respectively, to perform a snoop hit/miss test. In one embodiment where every write to the L1 cache 224 writes though into the L2 cache 126, the snoop hit/miss test may be performed at the L2 cache 126 only and the test result may be forwarded to the request originator via the snoop control 530 and the snoop filter 520. In some embodiments, a portion or all of the snoop controls 510 and 530 hardware may be located outside the GPU core 125 but within the GPU 120. In some embodiments, a portion or all of the snoop controls 510 and 530 hardware may be centrally located in the system 100; e.g., in the cache coherence interconnect 140,

When the 1^{st} L1 cache 224 receives a memory request from the GPU core 125 (more specifically, from the instruction-based computing module 220), it translates the virtual address in the request into a physical address. Physical address is needed for accessing the 1^{st} L1 cache 224 because its SRAM 513 is indexed using a portion of the physical addresses.

For the purpose of address translation, the 1^{st} L1 cache 224 includes or otherwise uses a translation look-aside buffer (TLB) 511 that stores a mapping between virtual addresses and their corresponding physical addresses. The TLB 511 serves as a first-level address translator that stores a few entries of a page table containing those translations that are most likely to be referenced (e.g., most-recently used translations or translations that are stored based on a replacement policy). If an address translation cannot be found in the TLB 511, a miss address signal is sent from the TLB 511 to a joint TLB 540. The joint TLB 540 serves as a second-level address translator that stores page table data containing additional address translations. The joint TLB 540 is jointly used by the 1^{st} L1 cache 224 and the L2 cache 126. The joint TLB 540, the TLB 511 (in the 1^{st} L1 cache 224) and a TLB 532 (in the L2 cache 126) are collectively called a memory management unit (MMU). If the joint TLB 540 also does not have the requested address translation, it sends a miss address signal to the memory controller 150 through the cache coherence interconnect 140, which retrieves the page table data containing the requested address translation either from the system memory 130 or elsewhere in the system 100 for the joint TLB 540. The joint TLB 540 then forwards the requested address translation to the TLB 511.

A portion of the physical address, also referred to as a physical tag, is used to perform a hit/miss test to determine whether a valid data with that physical tag is present in the SRAM 513. The hit/miss test unit 512 includes hardware to compare the requested physical tag with the tags of the cache lines stored in the SRAM 513 for determining the presence of a requested data. The hit/miss test unit 512 also maintains or has access to the states of the cache lines in the 1^{st} L1 cache 224. The states are used to determine whether a cache line including the requested data is valid. If a valid cache line with the requested physical tag is present in the SRAM 513 (i.e., a hit), that cache line pointed to by the requested index (which is also a portion of the physical address) is retrieved from the SRAM 513 to obtain the requested data. A copy of the data is sent to the request originator, which may be the instruction-based computing module 220, another GPU core 125, or any of the CPU cores 115 in the system 100.

In one embodiment, if the SRAM 513 does not contain a valid data copy with the requested physical tag, a miss is reported back to the snoop filter 520 via the snoop control 510. In case of a read miss, the 1^{st} L1 cache 224 forwards the physical address to the L2 cache 126 to continue the search for the requested data. In the embodiment of the 1^{st} L1 cache 224 that performs the operations shown in blocks 404-405 of Figure 4, a cache line in the SRAM 513 is identified for replacement according to a replacement policy, and the requested data that is later found in the L2 cache 126 or elsewhere in the system 100 is read into the identified cache line. The requested data is returned to the request originator as described above in the case of a hit. As mentioned before, the operations of 1^{st} L1 cache 224 may be different if a different write policy is used.

When the L2 cache 126 receives a memory request from the 1^{st} L1 cache 224 or the 2^{nd} L1 cache 234 of one of the GPU cores 125, a determination is made as to whether an address translation is needed. To properly route the memory requests, in one embodiment, the L2 cache 126 includes a virtual output queue (VOQ) 531 in which memory requests from the 1^{st} L1 cache 224 and the 2^{nd} L1 cache 234 are distinguished from one another. In one embodiment, the VOQ 531 uses one bit for each received memory request to indicate whether that request contains a virtual address (if the request is from the 2^{nd} L1 cache 234) or a physical address (if the request is from the 1^{st} L1 cache 224). The requests that contain physical addresses can bypass address translation. Similar to the 1^{st} L1 cache 224, the L2 cache 126 also includes the TLB 532, a hit/miss test unit 533, SRAM 534 and the snoop control 530, which perform the same operations as those performed by the TLB 511, the hit/miss test unit 512, the SRAM 513 and the snoop control 510 in the 1^{st} L1 cache 224, respectively. In particular, the hit/miss test unit 533 also maintains or has access to the states of the cache lines in the L2 cache 126. The states are used to determine whether a cache line in the L2 cache 126 is valid.

In one embodiment, the L2 cache 126 is inclusive of the 1^{st} L1 cache 126; i.e., the L2 cache 126 is inclusive of all of the cache lines in the 1^{st} L1 cache 224. That is, all of the cache lines in the 1^{st} L1 cache 224 are also in the L2 cache 126. When a cache line in the 1^{st} L1 cache 224 is replaced, the L2 cache 126 is notified about the removal of that cache line from the 1^{st} L1 cache 224 and the presence of the replacing cache line. When a cache line in the L2 cache 126 is replaced, the corresponding cache line (i.e., the cache line with the same physical tag) in the 1^{st} L1 cache 224 is invalidated. The updates to the cache line's states can be communicated between the 1^{st} L1 cache 224 and the L2 cache 126 via the snoop controls 510 and 530. This "inclusiveness" in generally improves the cache performance. In an embodiment where the MESI protocol is used, the 1^{st} L1 cache 224 and the L2 cache 126 can have the following combination of MESI states:

| | | | | | | | | | | | |
|---|---|---|---|---|---|---|---|---|---|---|---|
| L1 States | I | I | E | M | S | I | E | M | S | I | S |
| L2 States | I | E | E | E | E | M | M | M | M | S | S |

The above "inclusiveness" is not applied to the 2^{nd} L1 cache 234: generally, not all of the cache lines in the 2^{nd} L1 cache 234 are included in the L2 cache 126. In an alternative embodiment, both the 1^{st} L1 cache 224 and the L2 cache 126 may track or have access to their respective cache line's states using a cache coherence protocol (e.g., MESI or MEOSI), but the L2 cache 126 is not inclusive of the L1 cache 224.

The embodiment of Figure 5 also shows an arbiter 345 coupled to the snoop filter 520, the L2 cache 126 and the joint TLB 540. The arbiter 550 controls which hardware communicates with the cache coherence interconnect 140 in case of a bus contention.

As mentioned before, the 2^{nd} L1 cache 234 does not support snooping. The 2^{nd} L1 cache 234 receives memory requests from the fixed-function pipeline module 230. Each of these memory requests contains a virtual address. As the 2^{nd} L1 cache 234 uses the virtual tag (which is a portion of the virtual address) to access its internal SRAM, no address translation is needed for the purpose of cache access. However, as the system 100 tracks the cache line states in the physical address space, it does not track the cache line states of the 2^{nd} L1 cache 234. One way for a CPU core 115 to obtain a data copy from the 2^{nd} L1 cache 234 is to flush all or a predefined range of the 2^{nd} L1 cache 234 into the system memory 130. The flushed cache lines in the 2^{nd} L1 cache 234 are then invalidated. Thus, data coherence for the 2^{nd} L1 cache 234 is coarse-grained with respect to the number of cache lines involved (that is, flushed) in data transfer between heterogeneous processors. In contrast, data coherence for the 1^{st} L1 cache 224 and the L2 cache 126 is fine-grained, as a requested cache line or data entry can be transferred between heterogeneous processors by referring to its physical address.

It is understood that in alternative embodiments some of the hardware components in Figure 5 may reside in different locations from what is shown. For example, one or more of the TLB 511, the hit/miss test unit 512 and the snoop control 510 may be outside the 1^{st} L1 cache 224 and coupled to the 1^{st} L1 cache 224. Similarly, one or more of the VOQ 531, the TLB 532, the hit/miss test unit 533 and the snoop control 530 may be outside the L2 cache 126 and coupled to the L2 cache 126.

Moreover, athough the terms "1^{st} L1 cache", "2^{nd} L1 cache" and "L2 cache" are used throughout the description, it is understood that each of these caches may include more than one level of cache. Moreover, these caches may include the same or different levels of caches. For example, the 1^{st} L1 cache and the 2^{nd} L1 cache may each contains two levels of caches, and the L2 cache may contain one level of cache. Regardless how many level(s) that a cache contains, the characteristics of that cache (e.g., whether it supports snooping) are passed onto all its contained levels of caches.

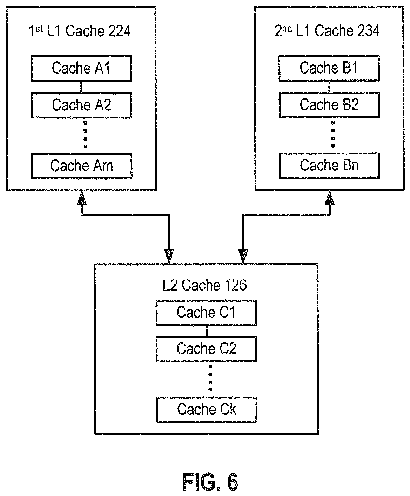

Figure 6 illustrates GPU caches that each includes one or more levels of caches according to one embodiment. In this embodiment, the 1^{st} L1 cache 224, the 2^{nd} L1 cache 234 and the L2 cache 126 contain m, n and k levels of caches, respectively, where m, n and k can be any positive integer. All m levels of caches within the 1^{st} L1 cache 224 support snooping and all k levels of the L2 cache 126 support snooping, while none of the n levels of caches within the 2^{nd} L1 cache 234 support snooping. The same operations described before with respect to the 1^{st} L1 cache 224, the 2^{nd} L1 cache 234 and the L2 cache 126 are performed by their contained levels of caches, respectively.

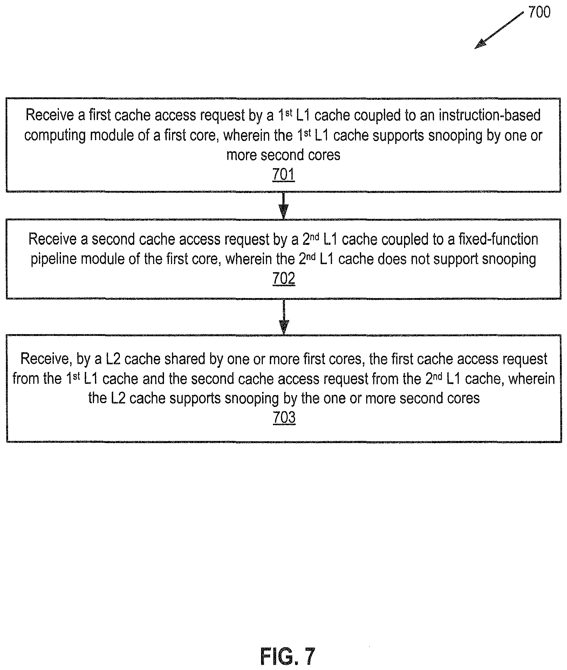

Figure 7 is a flow diagram illustrating a method 700 of a processing unit that includes one or more first cores and shares a system memory with one or more second cores in a heterogeneous computing system according to one embodiment. Referring to Figure 7, the method 700 begins with receiving a first cache access request by a 1^{st} L1 cache coupled to an instruction-based computing module of a first core, wherein the 1^{st} L1 cache supports snooping by the one or more second cores (block 701). The method 700 further comprises receiving a second cache access request by a 2^{nd} L1 cache coupled to a fixed-function pipeline module of the first core, wherein the 2^{nd} L1 cache does not support snooping (block 702). The method further comprises receiving, by a L2 cache shared by the one or more first cores, the first cache access request from the 1^{st} L1 cache and the second cache access request from the 2^{nd} L1 cache, wherein the L2 cache supports snooping by the one or more second cores (block 703).

The method 700 may be performed by hardware (e.g., circuitry, dedicated logic, programmable logic, microcode, etc.), software (e.g., instructions run on a processing device), or a combination thereof. In one embodiment, the method 700 is performed by the GPU 120 in a heterogeneous computing system 100 of Figures 1, 2 and 5. In one embodiment, the heterogeneous computing system 100 may be part of a mobile computing and/or communication device (e.g., a smartphone, a tablet, laptop, etc.). In one embodiment, the heterogeneous computing system 100 may be part of a cloud computing system. In one embodiment, the method 700 is performed by any type of processor that includes the 1^{st} L1 cache 224, the 2^{nd} L1 cache 234 and the L2 cache 126 (of Figure 2 and 5) in a heterogeneous computing system 100.

The operations of the flow diagrams of Figures 4 and 7 have been described with reference to the exemplary embodiments of Figures 1, 2 and 5. However, it should be understood that the operations of the flow diagrams of Figures 4 and 7 can be performed by embodiments of the invention other than those discussed with reference to Figures 1, 2 and 5, and the embodiments discussed with reference to Figures 1, 2 and 5 can perform operations different than those discussed with reference to the flow diagrams. While the flow diagrams of Figures 4 and 7 show a particular order of operations performed by certain embodiments of the invention, it should be understood that such order is exemplary (e.g., alternative embodiments may perform the operations in a different order, combine certain operations, overlap certain operations, etc.).

While the invention has been described in terms of several embodiments, those skilled in the art will recognize that the invention is not limited to the embodiments described, can be practiced with modification and alteration within the scope of the appended claims. The description is thus to be regarded as illustrative instead of limiting.

## Claims

1. A processing unit (120) comprising:
one or more first cores (125), wherein the one or more first cores (125) and one or more second cores (115) are part of a heterogeneous computing system and share a system memory (130), and **characterized in that** each of the first cores (125) further comprises:
a first level-1, in the following also referred to as L1, cache (224) coupled to an instruction-based computing module (220) of the first core (125) to receive a first cache access request, wherein the first L1 cache (224) supports snooping by the one or more second cores (115); and
a second L1 cache (234) coupled to a fixed-function pipeline module (230) of the first core (125) to receive a second cache access request, wherein the second L1 cache (234) does not support snooping; and
a level-2, in the following also referred to as L2, cache (126) shared by the one or more first cores (125) and coupled to the first L1 cache (224) and the second L1 cache (234), wherein the L2 cache (126) supports snooping by the one or more second cores (115), and wherein the L2 cache (126) receives the first cache access request from the first L1 cache (224), and receives the second cache access request from the second L1 cache (234).

2. The processing unit of claim 1, wherein each of the first L1 cache (224) and the L2 cache (126) provides coherence states of cache lines for the one or more second cores (115) to read.

3. The processing unit of claim 2, wherein each of the first L1 cache (224) and the L2 cache (126) includes circuitry to perform cache hit/miss tests based on the coherence states.

4. The processing unit of claim 1, wherein the first L1 cache (224) includes one or more levels of cache hierarchies, and the second L1 cache (234) includes one or more levels of cache hierarchies.

5. The processing unit of claim 1, wherein the first L1 cache (224) is operative to process cache access requests using physical addresses that are translated from virtual addresses.

6. The processing unit of claim 1, wherein the second L1 cache (234) is operative to process cache access requests using virtual addresses.

7. The processing unit of claim 1, wherein the L2 cache (126) includes hardware logic operative to differentiate a physical address received from the first L1 cache (224) and a virtual address received from the second L1 cache (234), and to bypass address translation for the physical address.

8. The processing unit of claim 1, wherein the first L1 cache (224) is operative to provide a cache line for the one or more second cores (115) to read in case of a snoop cache hit, and the second L1 cache (234) is operative to flush at least a range of cache lines to the system memory (130) for the one or more second cores (115) to read.

9. The processing unit of claim 1, further comprising:
snoop control hardware (510, 520, 530) to forward a cache access request from a second core (115) to at least one of the first L1 cache (224) and the L2 cache (126), and to forward a result of a snoop hit/miss test performed on the at least one of the first L1 cache (224) and the L2 cache (126) to the second core (115).

10. The processing unit of claim 1, wherein each of the first cores (120) is a core of a graphics processing unit, in the following referred to as GPU.

11. A method of a processing unit that includes one or more first cores and shares a system memory with one or more second cores in a heterogeneous computing system, the method being **characterized by**:
receiving a first cache access request by a first level-1, in the following referred to as L1, cache coupled to an instruction-based computing module of a first core, wherein the first L1 cache supports snooping by the one or more second cores (701);
receiving a second cache access request by a second L1 cache coupled to a fixed-function pipeline module of the first core, wherein the second L1 cache does not support snooping (702); and
receiving, by a level-2, in the following referred to as L2, cache shared by the one or more first cores, the first cache access request from the first L1 cache and the second cache access request from the second L1 cache, wherein the L2 cache supports snooping by the one or more second cores (703).

12. The method of claim 11, further comprising:
providing coherence states of cache lines of each of the first L1 cache and the L2 cache for the one or more second cores to read.

13. The method of claim 12, further comprising:
performing cache hit/miss tests on each of the first L1 cache and the L2 cache based on the coherence states.

14. The method of claim 11, further comprising:
processing requests to access the first L1 cache using physical addresses that are translated from virtual addresses.

15. The method of claim 11, further comprising:
processing requests to access the second L1 cache using virtual addresses.

## Patentansprüche

1. Verarbeitungseinheit (120), aufweisend:
einen oder mehrere erste Kerne (125), wobei der eine oder die mehreren ersten Kerne (125) und einen oder mehrere zweite Kerne (115) Teil eines heterogenen Computer-Systems sind und einen Systemspeicher (130) gemeinsam nutzen, und **dadurch gekennzeichnet, dass** jeder der ersten Kerne (125) weiter aufweist:
einen ersten Level-1-Cache (224), im Folgenden auch als L1-Cache bezeichnet, der mit einem instruktionsbasierten Berechnungsmodul (220) des ersten Kerns (125) verbunden ist, um eine erste Cache-Zugriffsanfrage zu empfangen, wobei der erste L1-Cache (224) ein Snooping durch den einen oder die mehreren zweiten Kerne (115) unterstützt; und
einen zweiten L1-Cache (234), der mit einem Festfunktions-Pipeline-Modul (230) des ersten Kerns (125) verbunden ist, um eine zweite Cache-Zugriffsanfrage zu empfangen, wobei der zweite L1-Cache (234) kein Snooping unterstützt; und
einen Level-2-Cache (126), im Folgenden auch als L2-Cache bezeichnet, der von dem einen oder den mehreren ersten Kernen (125) gemeinsam genutzt wird und mit dem ersten L1-Cache (224) und dem zweiten L1-Cache (234) verbunden ist, wobei der L2-Cache (126) ein Snooping durch den einen oder die mehreren zweiten Kerne (115) unterstützt, und wobei der L2-Cache (126) die erste Cache-Zugriffsanfrage von dem ersten L1-Cache (224) empfängt und die zweite Cache-Zugriffsanfrage von dem zweiten L1-Cache (234) empfängt.

2. Verarbeitungseinheit gemäß Anspruch 1, wobei sowohl der erste L1-Cache (224) als auch der L2-Cache (126) Kohärenzzustände von Cache-Zeilen für den einen oder die mehreren zweiten Kerne (115) zum Lesen bereitstellt.

3. Verarbeitungseinheit gemäß Anspruch 2, wobei sowohl der erste L1-Cache (224) als auch der L2-Cache (126) Schaltungen zum Ausführen von Cache-Treffer/Fehlversuchs-Tests basierend auf den Kohärenzzuständen aufweist.

4. Verarbeitungseinheit gemäß Anspruch 1, wobei der erste L1-Cache(224) eine oder mehrere Stufen von Cache-Hierarchien aufweist und der zweite L1-Cache (234) eine oder mehrere Stufen von Cache-Hierarchien aufweist.

5. Verarbeitungseinheit gemäß Anspruch 1, wobei der erste L1-Cache (224) funktionsfähig ist, Cache-Zugriffsanfragen unter Verwendung von physikalischen Adressen zu verarbeiten, die von virtuellen Adressen übersetzt sind.

6. Verarbeitungseinheit gemäß Anspruch 1, wobei der zweite L1-Cache (234) funktionsfähig ist, Cache-Zugriffsanfragen unter Verwendung von virtuellen Adressen zu verarbeiten.

7. Verarbeitungseinheit gemäß Anspruch 1, wobei der L2-Cache (126) Hardware-Logik aufweist, die funktionsfähig ist, eine von dem ersten L1-Cache (224) empfangene physikalische Adresse und eine von dem zweiten L1-Cache (234) empfangene virtuelle Adresse zu unterscheiden und eine Adressübersetzung für die physikalische Adresse zu umgehen.

8. Verarbeitungseinheit gemäß Anspruch 1, wobei der erste L1-Cache (224) funktionsfähig ist, in einem Fall eines Snoop-Cache-Treffers eine Cache-Zeile für den einen oder die mehreren zweiten Kerne (115) zum Lesen bereitzustellen, und der zweite L1-Cache (234) funktionsfähig ist, mindestens einen Bereich von Cache-Zeilen zu dem Systemspeicher (130) für den einen oder die mehreren zweiten Kerne (115) zum Lesen freizumachen.

9. Verarbeitungseinheit gemäß Anspruch 1, weiter aufweisend:
eine Snoop-Steuer-Hardware (510, 520, 530) zum Weiterleiten einer Cache-Zugriffsanfrage von einem zweiten Kern (115) an mindestens einen von dem ersten L1-Cache (224) und dem L2-Cache (126) und zum Weiterleiten eines Ergebnisses eines Snoop-Treffer/Fehlversuch-Tests, der auf den mindestens einen von dem ersten L1-Cache (224) und dem L2-Cache (126) durchgeführt wird, an den zweiten Kern (115).

10. Verarbeitungseinheit gemäß Anspruch 1, wobei jeder der ersten Kerne (120) ein Kern einer Graphikverarbeitungseinheit, im Folgenden als GPU bezeichnet, ist.

11. Verfahren einer Verarbeitungseinheit, die einen oder mehrere erste Kerne aufweist und einen Systemspeicher mit einem oder mehreren zweiten Kernen in einem heterogenen Computer-System gemeinsam nutzt, wobei das Verfahren **gekennzeichnet ist durch**:
Empfangen einer ersten Cache-Zugriffsanfrage **durch** einen ersten Level-1-Cache, im Folgenden als L1-Cache bezeichnet, der mit einem instruktionsbasierten Berechnungsmodul eines ersten Kerns verbunden ist, wobei der erste L1-Cache ein Snooping **durch** den einen oder die mehreren zweiten Kerne unterstützt (701);
Empfangen einer zweiten Cache-Zugriffsanfrage **durch** einen zweiten L1-Cache, der mit einem Festfunktions-Pipeline-Modul des ersten Kerns verbunden ist, wobei der zweite L1-Cache kein Snooping unterstützt (702); und
Empfangen der ersten Cache-Zugriffsanfrage von dem ersten L1-Cache und der zweiten Cache-Zugriffsanfrage von dem zweiten L1-Cache **durch** einen Level-2-Cache, im Folgenden als L2-Cache bezeichnet, der **durch** den einen oder die mehreren ersten Kerne gemeinsam genutzt wird, wobei der L2-Cache ein Snooping **durch** den einen oder die mehreren zweiten Kerne unterstützt (703).

12. Verfahren gemäß Anspruch 11, weiter aufweisend:
Bereitstellen von Kohärenzzuständen von Cache-Zeilen sowohl des ersten L1-Caches als auch des L2-Caches zum Lesen für den einen oder die mehreren zweiten Kerne.

13. Verfahren gemäß Anspruch 12, weiter aufweisend:
Ausführen von Cache-Treffer/Fehlversuchs-Tests sowohl für den ersten L1-Cache als auch für den L2-Cache basierend auf den Kohärenzzuständen.

14. Verfahren gemäß Anspruch 11, weiter aufweisend:
Bearbeiten von Anfragen, unter Verwendung von physikalischen Adressen, die von virtuellen Adressen übersetzt sind, auf den ersten L1-Cache zuzugreifen.

15. Verfahren gemäß Anspruch 11, weiter aufweisend:
Bearbeiten von Anfragen, unter Verwendung von virtuellen Adressen auf den L1-Cache zuzugreifen.

## Revendications

1. Unité de traitement (120) comprenant :
un ou plusieurs premier(s) noyau(x) (125), dans laquelle le ou les plusieurs premier(s) noyau(x) et un ou plusieurs deuxième(s) noyau(x) (115) font partie d'un système informatique hétérogène et partagent une mémoire système (130), et **caractérisée en ce que** chacun des premiers noyaux (125) comprend en outre :
une première mémoire cache de niveau-1 (224), ci-après également appelé L1, couplée à un module informatique à base d'instructions (220) du premier noyau (125) pour recevoir une demande d'accès à la première mémoire cache, dans laquelle la première mémoire cache L1 (224) prend en charge la surveillance par le ou les plusieurs deuxième(s) noyau(x) (115) ; et
une deuxième mémoire cache L1 (234) couplée à un module de chaine de traitement à fonction fixe (230) du premier noyau (125) pour recevoir une demande d'accès à la deuxième mémoire cache, dans laquelle la deuxième mémoire cache L1 (234) ne prend pas en charge la surveillance ; et
une mémoire cache de niveau-2 (126), ci-après également appelé L2, partagée par le ou les plusieurs premier(s) noyau(x) (125) et couplée à la première mémoire cache L1 (224) et à la deuxième mémoire cache L1 (234), dans laquelle la mémoire cache L2 (126) prend en charge la surveillance par le ou les plusieurs deuxième(s) noyau(x) (115), et dans laquelle la mémoire cache L2 (126) reçoit la demande d'accès à la première mémoire cache à partir de la première mémoire cache L1 (224), et reçoit la demande d'accès à la deuxième mémoire cache à partir de la deuxième mémoire cache L1 (234).

2. Unité de traitement de la revendication 1, dans laquelle chacune de la première mémoire cache L1 (224) et de la mémoire cache L2 (126) fournit des états de cohérence de lignes de mémoire cache pour le ou les plusieurs deuxième(s) noyau(x) (115) pour lecture.

3. Unité de traitement de la revendication 2, dans laquelle chacune de la première mémoire cache L1 (224) et de la mémoire cache L2 (126) comporte un ensemble de circuits pour effectuer des tests de présence/absence de mémoire cache sur la base des états de cohérence.

4. Unité de traitement de la revendication 1, dans laquelle la première mémoire cache L1 (224) comporte un ou plusieurs niveau(x) de hiérarchies de mémoire cache, et la deuxième mémoire cache L1 (234) comporte un ou plusieurs niveau(x) de hiérarchies de mémoire cache.

5. Unité de traitement de la revendication 1, dans laquelle la première mémoire cache L1 (224) peut fonctionner pour traiter des demandes d'accès à la mémoire cache en utilisant des adresses physiques qui sont traduites à partir d'adresses virtuelles.

6. Unité de traitement de la revendication 1, dans laquelle la deuxième mémoire cache L1 (234) peut fonctionner pour traiter des demandes d'accès à la mémoire cache en utilisant des adresses virtuelles.

7. Unité de traitement de la revendication 1, dans laquelle la mémoire cache L2 (126) comporte une logique matérielle pouvant fonctionner pour faire la différence entre une adresse physique reçue à partir de la première mémoire L1 cache (224) et une adresse virtuelle reçue à partir de la deuxième mémoire cache L1 (234), et pour contourner la traduction d'adresses pour l'adresse physique.

8. Unité de traitement de la revendication 1, dans laquelle la première mémoire cache L1 (224) peut fonctionner pour fournir une ligne de mémoire cache pour le ou les plusieurs deuxième(s) noyau(x) (115) pour lecture dans le cas de présence de mémoire cache/de surveillance, et la deuxième mémoire cache L1 (234) peut fonctionner pour vider au moins une plage de lignes de mémoire cache dans la mémoire système (130) pour le ou les plusieurs deuxième(s) noyau(x) (115) pour lecture.

9. Unité de traitement de la revendication 1, comprenant en outre :
un matériel de contrôle de surveillance (510, 520, 530) pour transférer une demande d'accès à la mémoire cache à partir d'un deuxième noyau (115) à au moins l'une de la première mémoire cache L1 (224) et de la mémoire cache L2 (126), et pour transférer un résultat d'un test de présence/absence de surveillance effectué sur ladite au moins une mémoire cache de la première mémoire cache L1 (224) et de la mémoire cache L2 (126) au deuxième noyau (115).

10. Unité de traitement de la revendication 1, dans laquelle chacun des premiers noyaux (120) est un coeur d'une unité de traitement graphique, ci-après appelée GPU.

11. Procédé d'une unité de traitement qui comporte un ou plusieurs premier(s) noyau(x) et qui partage une mémoire système avec un ou plusieurs deuxième(s) noyau(x) dans un système informatique hétérogène, le procédé étant **caractérisé par** le fait :
de recevoir une demande d'accès à une première mémoire cache par une première mémoire cache de niveau-1, ci-après appelé L1, couplée à un module informatique à base d'instructions d'un premier noyau, où la première mémoire cache L1 prend en charge la surveillance par le ou les plusieurs deuxième(s) noyau(x) (701) ;
de recevoir une demande d'accès à une deuxième mémoire cache par une deuxième mémoire cache L1 couplée à un module à chaine de traitement à fonction fixe du premier noyau, où la deuxième mémoire cache L1 ne prend pas en charge la surveillance (702) ; et
de recevoir, par une mémoire cache de niveau-2, ci-après appelé L2, partagée par le ou les plusieurs premier(s) noyau(x), la demande d'accès à la première mémoire cache à partir de la première mémoire cache L1 et la demande d'accès à la deuxième mémoire cache à partir de la deuxième mémoire cache L1, dans lequel la mémoire cache L2 prend en charge la surveillance par le ou les plusieurs deuxième(s) noyau(x) (703).

12. Procédé de la revendication 11, comprenant en outre le fait :
de fournir des états de cohérence de lignes de mémoire cache de chacune de la première mémoire cache L1 et de la mémoire cache L2 pour le ou les plusieurs deuxième(s) noyau(x) pour lecture.

13. Procédé de la revendication 12, comprenant en outre le fait :
d'effectuer des tests de présence/d'absence de mémoire cache sur chacune de la première mémoire cache L1 et de la mémoire cache L2 sur la base des états de cohérence.

14. Procédé de la revendication 11, comprenant en outre le fait :
de traiter des demandes d'accès à la première mémoire cache L1 en utilisant des adresses physiques qui sont traduites à partir d'adresses virtuelles.

15. Procédé de la revendication 11, comprenant en outre le fait :
de traiter des demandes d'accès à la deuxième mémoire cache L1 en utilisant des adresses virtuelles.
